# EUROPEAN PATENT APPLICATION

(11) **EP 2 573 034 A1**
(43) Date of publication of application: **27.03.2013**
(21) Application number: 10851733.5
(22) Date of filing: 18.05.2010
(51) Int. Cl.: B66B 3/00, B66B 1/14

(54) **ELEVATOR CALL REGISTRATION DEVICE**

(71) Applicant: Mitsubishi Electric Corporation, Tokyo 100-8310 (JP)
(72) Inventor: ISHIHARA, Fumiaki, Nagoya-shi, Aichi 461-8670 (JP)
(74) Representative: HOFFMANN EITLE
(86) International application number: PCT/JP2010/058348
(87) International publication number: WO 2011/145169

(57) **Abstract**

In a call registration device of an elevator, it is ensured that a passenger of an elevator is prevented from failing to register a call by voice many times and that the call required by a passenger can be smoothly registered.

For this purpose, a microphone and a notification unit are provided in a car (or hall) of an elevator. The call registration device is provided with voice recognizing means which makes a determination as to whether or not voice data inputted from the microphone agrees with floor data which has already been registered under prescribed conditions and voice determining means which causes various kinds of actions to be performed according to the determination result of the voice recognizing means. In the case where the voice data agrees with the whole of the floor data, the voice determining means causes a call for a destination floor corresponding to the floor data to be registered. Furthermore, in the case where the voice data agrees with only part of the floor data, the voice determining means causes the notification unit to make prescribed notification and causes an elevator passenger to re-input voices corresponding to other parts of the floor data from the microphone.

## Description

### Technical Field

The present invention relates to a call registration device of an elevator which enables an elevator passenger to register calls by voice.

### Background Art

Patent Literature 1 to Patent Literature 4 propose call registration devices capable of performing call registration of elevator by voice.

For example, the call registration device described in Patent Literature 1 permits call registration by voice only in the case where the presence of a person in front of a microphone is being detected, thereby preventing a wrong call registration (a wrong voice recognition) from being performed due to the conversations of the waiting people in a hall, surrounding noises and the like. As means for preventing a wrong registration of a call, Patent Literature 2 describes that a plurality of microphones for voice input are installed, and Patent Literature 3 describes that voice recognition is performed by a plurality of processing methods.

The call registration device described in Patent Literature 4 enables call registration by words designating destination places, such as "entrance" and "bookstore," to be performed. Furthermore, in the call registration device described in Patent Literature 4, a plurality of synonyms are registered for one destination place.

### Citation List

### Patent Literature

Patent Literature 1: Japanese Patent No. 2557939
Patent Literature 2: Japanese Patent Laid-Open No. 3-284589
Patent Literature 3: Japanese Patent No. 3082618
Patent Literature 4: Japanese Patent Laid-Open No. 2002-128404

### Summary of Invention

### Technical Problem

In conventional call registration devices including those described in Patent Literature 1 to Patent Literature 4, in order to identify the destination floor of a passenger, the voice data inputted from a microphone is analyzed and a determination is made as to whether or not the voice data includes the floor data which has already been registered. For this reason, if a passenger cannot speak fluently or talks in a dialect, even in the case where the passenger considers that he or she talks in a right way, the call required by the passenger is not readily registered and hence the passenger has to say his or her destination floor and the like many times.
Incidentally, the longer the character string of the floor which a passenger is going to register, the more frequently such a problem is apt to occur.

The present invention was made to solve the problem described above, and an object of the invention is provide a call registration device of an elevator which prevents a passenger of an elevator from failing to register a call by voice many times and can register the call required by a passenger smoothly.

### Solution to Problem

A call registration device of an elevator of the invention is a device which comprises a microphone and a notification unit provided in a hall or a car of an elevator, voice recognizing means which performs prescribed voice recognition processing for voice data inputted from the microphone and makes a determination as to whether or not the voice data agrees with floor data which has already been registered under prescribed conditions, and voice determining means which, in the case where it is determined by the voice recognizing means that voice data agrees with the whole of floor data, causes a call for a destination floor corresponding to the floor data to be registered. In the case where it is determined by the voice recognizing means that voice data agrees with only part of floor data, the voice determining means causes the notification unit to make prescribed notification and causes an elevator passenger to re-input voices corresponding to other parts of the floor data from the microphone.

### Advantageous Effect of Invention

With the call registration device of an elevator according to the present invention, it is possible to prevent a passenger of an elevator from failing to register a call by voice many times and to register the call required by a passenger smoothly.

### Brief Description of Drawings

Figure 1 is a block diagram showing a call registration device of an elevator in a first embodiment according to the present invention.
Figure 2 is a diagram showing the condition in a car of an elevator provided with the call registration device of Figure 1.
Figure 3 is a flowchart showing the actions of the call registration device of an elevator in the first embodiment according to the present invention.
Figure 4 is a block diagram showing the main part of a call registration device of an elevator in a second embodiment according to the present invention.
Figure 5 is a flowchart showing the actions of the call registration device of an elevator in the second embodiment according to the present invention.

### Description of Embodiments

The present invention will be described in more detail with reference to the accompanying drawings. Incidentally, in each of the drawings, like numerals refer to like or corresponding parts and redundant descriptions of these parts are appropriately simplified or omitted.

### First embodiment

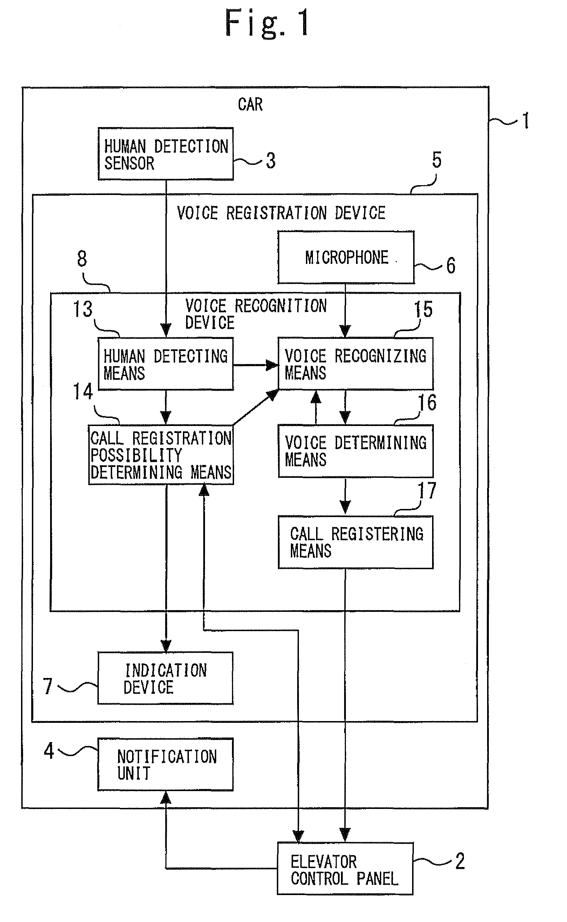

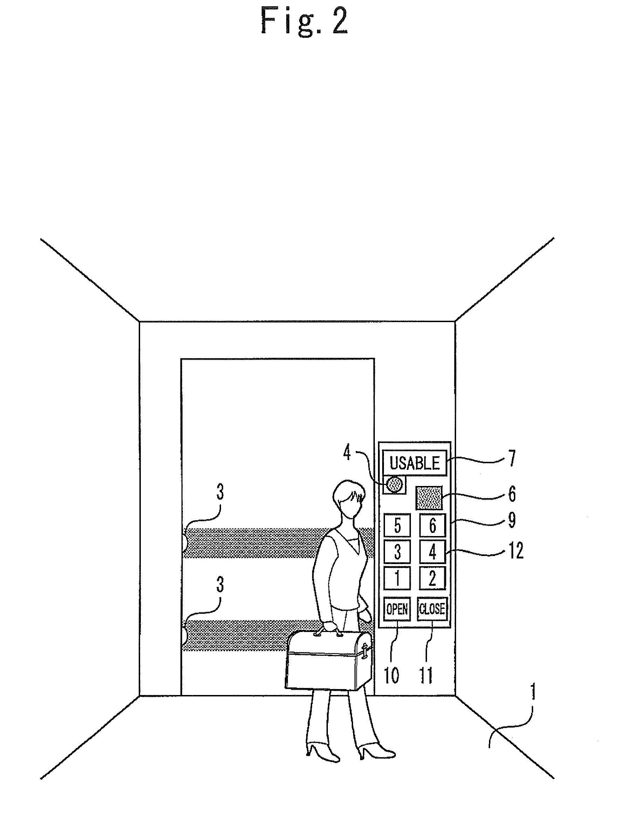

Figure 1 is a block diagram showing a call registration device of an elevator in a first embodiment according to the present invention, and Figure 2 is a diagram showing the condition in a car of an elevator provided with the call registration device of Figure 1.

In Figures 1 and 2, reference numeral 1 denotes a car which ascends and descends in the shaft of an elevator, and reference numeral 2 denotes a control panel which controls the operation of the whole elevator such as the running control of the car 1. The car 1 is provided with a human detection sensor (a human detector) 3, a notification unit 4, and a voice registration device 5.

The human detection sensor 3 has a function of detecting a passenger present in a prescribed detection range. Specifically, the human detection sensor 3 is provided in order to detect a person who is to be a user of the voice registration device 5, and for example, the detection range thereof is set so as to cross the entrance of the car 1 (see Figure 2). Incidentally, in the example shown in Figure 2, a plurality of human detection sensors 3 are installed on a vertical frame forming the entrance of the car 1, whereby detection ranges are arranged on the upper and lower sides to prevent a failure to detect a passenger. If this arrangement is adopted, the presence of a passenger is positively detected by at least any of the human detection sensors 3 when the passenger passes through the entrance of the car 1.

The notification unit 4 has a function of notifying the passengers in the car 1 of prescribed information. This notification unit 4 is composed of, for example, a speaker which provides voice guidance to the passenger in the car 1, a display which indicates characters, or the like. The notification unit 4 is controlled on the basis of instructions, for example, from the control panel 2 and the voice registration device 5.

The voice registration device 5 is installed in the car 1 in order that a passenger in the car 1 registers a call by voice. The voice registration device 5 has a function of recognizing a destination floor of a passenger in a stepwise manner by dividing the recognition into a plurality of steps (performing the stepwise registration of a voice), and the main part thereof is composed of, for example, a microphone (a voice input device) 6, an indication device 7, and a voice recognition device 8.

The microphone 6 is installed in the car 1 for use as voice input. That is, a passenger who wants to register a call by voice inputs the voice information about his/her destination floor or the like through this microphone 6. The indication device 7 has a function of indicating to a passenger in the car 1 that the voice registration device 5 is in operation, that is, that call registration by voice is possible. This indication device 7 is composed of, for example, an LED display or the like.

Incidentally, in the example shown in Figure 2, the microphone 6 and the indication device 7 are arranged on the operating panel 9 in the car 1. In addition to the notification unit 4, a door open button 10, a door close button 11 and destination buttons 12 are also provided on the operating panel 9.

The voice recognition device 8 constitutes the main part of the present invention, and the main part is composed of, for example, human detecting means 13, call registration possibility determining means 14, voice recognizing means 15, voice determining means 16, and call registering means 17.

The human detecting means 13 receives detection signals from the human detection sensor 3 and detects the presence or absence of a passenger who is to be a user of the voice registration device 5.

The call registration possibility determining means 14 has a function of determining whether or not it is possible to register a call by voice. That is, even if a passenger utters a voice to the microphone 6 when it is determined by the call registration possibility determining means 14 that call registration by voice is impossible, the registration of a call is not performed. The detection result of the presence or absence of a passenger from the human detecting means 13 and data related to the operation condition of the elevator from the control panel 2 are inputted to this call registration possibility determining means 14. Incidentally, the data inputted from the control panel 2 includes, for example, door opening/closing information of an elevator and the like. For example, when the human detection sensor 3 detects the presence of a passenger while the elevator door is open, on the basis of these pieces of inputted information, the call registration possibility determining means 14 determines that call registration by voice is possible during the time until the door is closed.

The voice recognizing means 15 performs the voice recognizing function of the voice registration device 5. Specifically, when voice data is inputted from the microphone 6, the voice recognizing means 15 performs prescribed voice recognition processing for the voice data. The voice recognizing means 15 makes a determination as to whether or not the voice data agrees with any of the floor data which has already been registered under prescribed conditions.

The voice determining means 16 has a function of causing each device and means to perform an appropriate action on the basis of the determination result of the voice recognizing means 15. Specifically, the voice determining means 16 decides the contents of later actions on the basis of to which extent the voice data agrees with the floor data, i.e., the degree of agreement. For example, when it is determined by the voice recognizing means 15 that the voice date inputted from the microphone 6 agrees with the whole of a certain floor data, the voice determining means 16 outputs a determination signal to that effect to the call registering means 17, and causes the call registering means 17 to perform the call registration of a destination floor corresponding to the floor data.

When it is determined by the voice recognizing means 15 that the voice date inputted from the microphone 6 agrees partly with any of the floor data (agrees with only part of a certain floor data), the voice determining means 16 starts prescribed processing for the stepwise registration of a voice. The description will be given later of the contents of concrete actions at this time.

The call registering means 17 has a function of performing call registration. For example, on receiving a determination signal indicating total agreement from the voice determining means 16 when it is determined by the call registration possibility determining means 14 that call registration by voice is possible, the call registering means 17 outputs a corresponding request for registration to the control panel 2 and causes a call of a passenger to be registered.

For example, the above-described function by the call registering means 17 can be realized easily by turning on the switch of the microphone 6 or by making the voice recognizing function of the voice recognizing means 15 effective only when it is determined by the call registration possibility determining means 14 that registration is possible. Furthermore, the voice input from the microphone 6 and the voice recognizing function of the voice recognizing means 15 may be set to be constantly effective by making a determination as to whether or not call registration is possible in the voice determining means 16 or the call registering means 17.

Incidentally, each of the means 13 to 17 provided in the voice recognition device 8 is composed of, for example, software on a microcomputer.

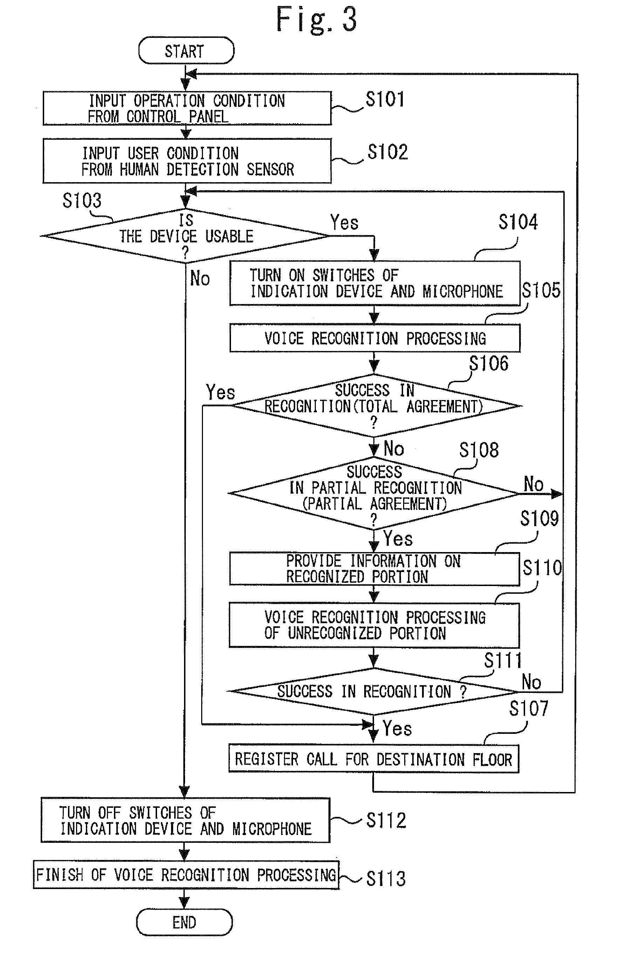

Next, referring to also Figure 3, a concrete description will be given of the actions of the call registration device having the above-described configuration. Figure 3 is a flowchart showing the actions of the call registration device of an elevator in the first embodiment according to the present invention.

In the voice registration device 5, the call registration possibility determining means 14 obtains data on the operation condition of the elevator from the control panel 2 (S101). The data obtained by the call registration possibility determining means 14 at this time contains various pieces of information, for example, the door opening/closing condition of the car 1, the call registration condition and the boarding load of the elevator (the car 1).
The human detecting means 13 obtains data on the user condition of the voice registration device 5 from the human detection sensor 3 (S102).

When in S101 and S102 various kinds of information are obtained, by using the call registration possibility determining means 14, the voice registration device 5 makes a determination as to whether or not the condition enables a call to be registered by voice (S103).

If the condition enables a call to be registered by voice at this time, the voice registration device 5 turns on each switch of the indication device 7 and microphone 6 (S104). As a result of this, the LED of the indication device 7 lights up, indicating "usable" or the like, and notifying the passengers in the car 1 that call registration by voice is possible as shown Figure 2, for example. In addition, it becomes possible to perform voice input from the microphone 6.

When voice input from the microphone 6 becomes possible, the voice recognizing means 15 starts voice recognition processing (S105). Upon input of voice data from the microphone 6, the voice recognizing means 15 performs an analysis of the inputted voice data, and makes a determination as to whether or not the voice data agrees with any of the pre-registered floor data under prescribed conditions.

When it is determined by the voice recognizing means 15 that the voice data inputted from the microphone 6 agrees with the whole of any of the floor data (Yes in S 106), the voice determining means 16 outputs a determination signal to that effect to the call registering means 17. Upon receipt of the determination signal, the call registering means 17 outputs a corresponding request for registration and causes the control panel 2 to register a call of a passenger (S107).

In the case where in S 106 a total agreement cannot be made sure of, the voice recognizing means 15 makes a determination as to whether or not the voice data inputted from the microphone 6 agrees partially with any of the floor data (S108). Incidentally, if in S 108 even partial agreement cannot be made sure of, the voice registration device 5 returns to the processing in S 103.

On the other hand, when a partial agreement between the voice data and the floor date is made sure of (Yes in S 108), the voice determining means 16 starts the processing for performing stepwise registration of a voice.
Specifically, first, the voice determining means 16 causes the notification unit 4 to provide information on the contents of a portion of the floor data which agrees with the voice data in the floor date which agreed partially with the voice data (a portion recognized in voice recognition processing) (S109). The voice determining means 16 further makes prescribed notification and causes the passenger of the elevator to re-input from the microphone 6 a voice corresponding to the portion of the above-described floor data which did not agree with the voice data (the portion not recognized in voice recognition processing).

For example, as in "the 20 (niju) ** floor (* indicates a portion not recognized)," when it is determined by the voice recognizing means 15 that only the voice data of the tenth digit agrees with the floor data, the voice determining means 16 performs a character display or voice announcement of the contents such as "the recognized portion is "20" (niju) and please register again the portion not recognized," thereby urging the passenger to re-input from the microphone 6 the unit digit (the above-described portion of **).

When the voice data is re-inputted from the microphone 6 after the notification in S109, the voice recognizing means 15 starts voice recognition processing for the re-inputted voice data. Specifically, the voice recognizing means 15 performs an analysis of the voice data re-inputted from the microphone 6, and makes a determination as to whether or not the voice data agrees with the portion of the above-described floor data, which was not recognized in the last voice recognition processing (S110, S111). For example, in the case where partial agreement of "the 20 (niju) ** floor" was capable of being made sure of in the last voice recognition processing, the voice recognizing means 15 makes a determination as to whether or not the voice data re-inputted from the microphone 6 agrees with the portion of "**."
At this time, the voice recognizing means 15 may change the recognition level by a method of raising the gain or increasing the number of keywords for voice recognition.

When a success is obtained in the recognition of the portion for which agreement was incapable of being made sure of in the last voice recognition processing (Yes in S111), the voice determining means 16 identify floor data from the portion recognized in S108 and the remaining portion recognized in S111, and causes the call registering means 17 to register a call for the destination floor corresponding to the identified floor data (S107). When the call is registered in S107, the voice registration device 5 returns to the processing in S101.
Incidentally, if the recognition is unsuccessful in S111, the voice registration device 5 returns to the processing in S103.

When the conditions for using the voice registration device 5 cease to hold and the determination of incapability of use (No) is made in S 103, the voice registration device 5 turns off each switch of the indication device 7 and microphone 6 (S112). As a result of this, the LED of the indication device 7 comes off and the passengers in the car 1 are notified that the operating time of the voice registration device 5 has finished. Because of the stop of voice input from the microphone 6, the voice recognizing means 15 finishes the voice recognition processing (S113).

According to the first embodiment of the present invention, even in the case where the voice data inputted from the microphone 6 does not agree with the whole of any of the floor data, processing for the stepwise registration of a voice is started if partial agreement is made sure of. For this reason, for example, even in the case where a passenger cannot speak fluently or talks in a dialect, this passenger is prevented from failing to register a call by voice many times and it becomes possible to register the call required by a passenger smoothly.

Incidentally, in performing the stepwise registration of a voice, the rage of comparison with floor data may be appropriately adjusted by using terms representing the position of "hundredth" (hyaku) and "tenth" (ju) or specific terms such as "floor" (kai and gai) representing the ends of names of floors. As a result of this, it becomes possible to smoothly register floors of 2 or more figures (the 45th floor, the 123rd floor and the like).
Furthermore, in this embodiment, a concrete description was given of the call registration device installed in the car 1. However, this is a mere example, and the call registration device of the above-described configuration may be installed in a hall of an elevator. Even in this case, it is possible to produce the same effect as described above.

### Second embodiment

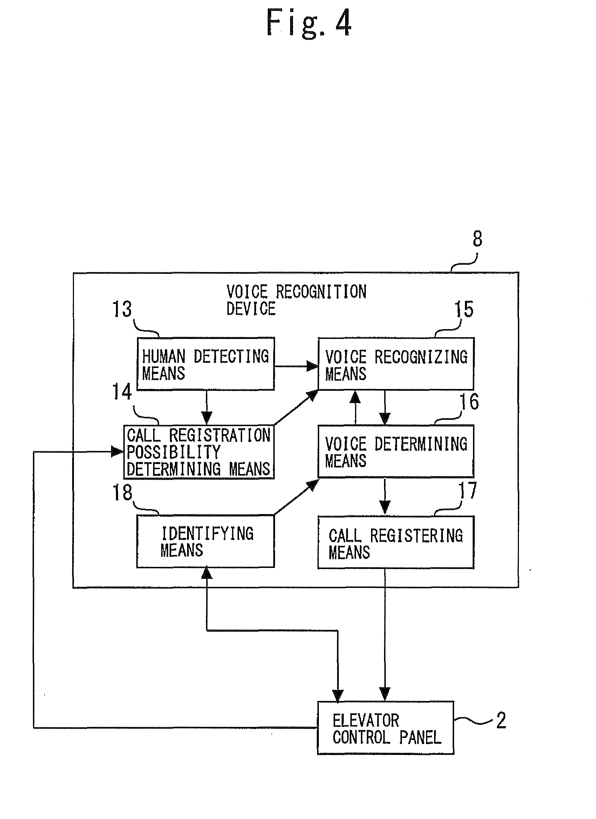

Figure 4 is a block diagram showing the main part of a call registration device of an elevator in a second embodiment according to the present invention. In a voice recognition device 8 in this embodiment, identifying means 18 is provided in addition to the means 13 to 17. Incidentally, as with other means 13 to 17, the identifying means 18 is composed of, for example, software on a microcomputer.

The identifying means 18 has a function of identifying the floors capable of being served by the car 1. Because of the new addition of the identifying means 18, the voice determining means 16 causes the notification unit 4 to make prescribed notification in which the identification result of the identifying means 18 is also considered when stepwise registration of a voice is performed. Specifically, when it is determined by the voice recognizing means 15 that the voice data agrees with only part of a certain floor data, the voice determining means 16 causes the notification unit 4 to provide information on a floor whose floor name contains the portion corresponding to the above-described portion of the floor data and which is determined by the identifying means 18 to be serviceable.

Other component parts including component parts other than those of the voice recognition device 8 are the same as those of the first embodiment.

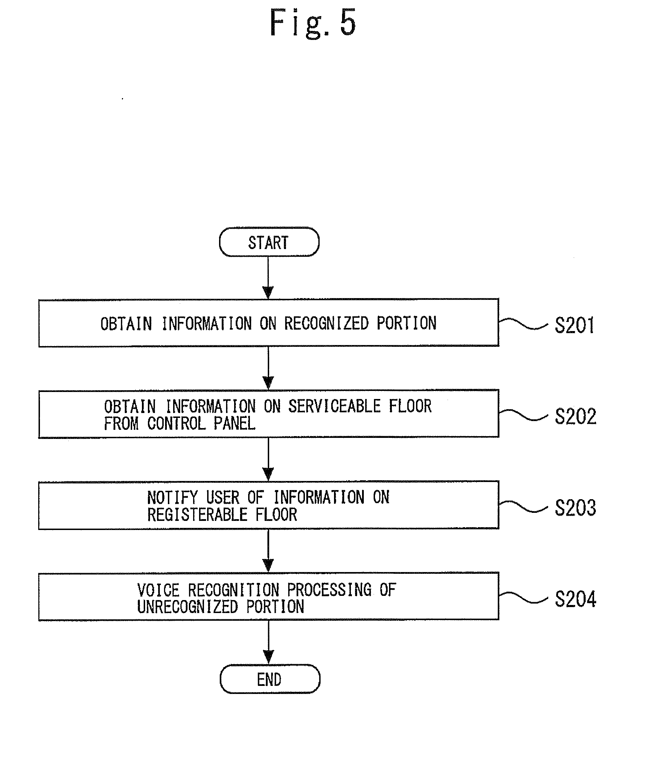

Next, referring to also Figure 5, a concrete description will be given of the actions of the call registration device having the above-described configuration. Figure 5 is a flowchart showing the actions of the call registration device of an elevator in the second embodiment according to the present invention and shows a concrete processing flow of the voice registration device 5 in this embodiment. Incidentally, actions of Figure 5 correspond to actions of S109 and S 110 of Figure 3. That is, other actions (actions before and after the actions shown in Figure 5) are the same as actions of S101 to S 108 and S111 to S113 of Figure 3.

When it is determined by the voice recognizing means 15 that the voice data inputted from the microphone 6 agrees with only partially with any of the floor data which has already been registered (corresponding to Yes in S108 of Figure 3), the voice determining means 16 obtains the information on the portion of the floor data agreeing with the voice data (the portion recognized in voice recognition processing) (the recognition information) from the voice recognizing means 15 (S201). For example, in the case where in the voice recognition processing, agreement of the tenth digit alone as in "the 20 (niju) ** floor" was made sure of, the voice determining means 16 obtains the recognition information corresponding to "20" (niju) (and "floor" (kai)) from the voice recognizing means 15.

Also, when partial agreement between the voice data and the floor data is made sure of by the voice recognizing means 15, the identifying means 18 obtains the information on the floors capable of being served by the car 1 (serviceable floors) from the control panel 2, and outputs this information to the voice determining means 16 (S202).

Upon input of the recognition information from the voice recognizing means 15 and of the information on the serviceable floors from the identifying means 18, on the basis of these pieces of inputted information, the voice determining means 16 specifies floors which the passenger can register soon after the registration of the above-described recognized portion (corresponding to "20" (niju)) (registerable floors), and causes the notification unit 4 to provide the information on these floors (S203).

For example, if in voice recognition processing, agreement of the tenth digit alone is made sure of as in "the 20 (niju) ** floor" when the floors capable of being served by the car 1 are present between the 1st floor and the 25th floor, the voice determining means 16 identifies the 21st floor to 25th floor which the passenger can register soon after the registration of "20" (niju) as floors capable of being registered by this passenger. Then, the voice determining means 16 performs character indication and voice announcement to the effect that "Voice recognition was partially impossible. The registerable floors are from the 21st floor to the 25th floor. Please register again the portion which was incapable of being recognized," and urging the passenger to re-input the unit digit (the above-described portion of **) from the microphone 6.

Incidentally, the processing in S204 of Figure 5 is the same as in S109 of Figure 3.

With the call registration device of the above-described configuration, in the case where only partial recognition was capable of being performed in voice recognition processing, it is possible to make notification about an optimum registerable floor suited to the recognition result. For this reason, for example, in the case where a passenger is going to resister by mistake a floor which is not served by the car 1, it becomes possible to positively prevent the passenger from failing to register a call by continuously uttering the floor many times.
In other respects, the same effect as the first embodiment is achieved.

Incidentally, in this embodiment, the description was given of the case where the identification of a registerable floor is carried out in the voice determining means 16. However, this identification of a registerable floor may be carried out in other means, for example, the identifying means 18. In this case, upon receipt of recognition information from the voice recognizing means 15, the voice determining means 16 transfers the obtained recognition information to the identifying means 18. The identifying means 18 identifies the registerable floor on the basis of the recognition information inputted from the voice determining means 16 and the serviceable floor information obtained from the control panel 2.

### Industrial Availability

The call registration device of an elevator according to the preset invention can be applied to a call registration device in which a passenger of an elevator can register a call by voice.

### Reference Signs List

1 car
2 control panel
3 human detection sensor
4 notification unit
5 voice registration device
6 microphone
7 indication device
8 voice recognition device
9 operating panel
10 door open button
11 door close button
12 destination button
13 human detecting means
14 call registration possibility determining means
15 voice recognizing means
16 voice determining means
17 call registering means
18 identifying means

## Claims

1. A call registration device of an elevator, comprising:
a microphone and a notification unit provided in a hall or a car of an elevator;
voice recognizing means which performs prescribed voice recognition processing for voice data inputted from the microphone and makes a determination as to whether or not the voice data agrees with floor data which has already been registered under prescribed conditions; and
voice determining means which, in the case where it is determined by the voice recognizing means that voice data agrees with the whole of floor data, causes a call for a destination floor corresponding to the floor data to be registered,
wherein in the case where it is determined by the voice recognizing means that voice data agrees with only part of floor data, the voice determining means causes the notification unit to make prescribed notification and causes an elevator passenger to re-input voices corresponding to other parts of the floor data from the microphone.

2. The call registration device of an elevator according to claim 1, wherein
when voice data is re-inputted from the microphone, the voice recognizing means makes a determination as to whether or not the voice data agrees with the other parts of floor date, and
in the case where it is determined by the voice recognizing means that re-inputted voice data agrees with the other parts of floor data, the voice determining means causes a call for a destination floor corresponding to the floor data to be registered.

3. The call registration device of an elevator according to claim 1 or 2, further comprising:
identifying means which identifies floors capable of being served by the car,
wherein in the case where it is determined by the voice recognizing means that voice data agrees with only part of floor data, the voice determining means causes the notification unit to provide information on floors which are floors whose floor names include parts corresponding to the part of floor data and are determined by the identifying means to be capable of being served.
